(19) Europäisches Patentamt
European Patent Office
Office européen des brevets

(11) **EP 3 311 122 B1**

(12) **EUROPÄISCHE PATENTSCHRIFT**

(45) Veröffentlichungstag und Bekanntmachung des Hinweises auf die Patenterteilung:
**29.01.2020 Patentblatt 2020/05**

(21) Anmeldenummer: **16728945.3**

(22) Anmeldetag: **13.06.2016**

(51) Int Cl.:
***G01D 18/00*** *(2006.01)*

(86) Internationale Anmeldenummer:
**PCT/EP2016/063516**

(87) Internationale Veröffentlichungsnummer:
**WO 2016/202745 (22.12.2016 Gazette 2016/51)**

(54) **VORRICHTUNG UND VERFAHREN ZUM PLAUSIBILISIEREN EINES ERREGERSIGNALS FÜR EINEN DREHWINKELGEBER**

APPARATUS AND METHOD FOR CHECKING THE PLAUSIBILITY OF AN EXCITATION SIGNAL FOR A ROTARY ENCODER

DISPOSITIF ET PROCÉDÉ POUR VÉRIFIER LA PLAUSIBILITÉ D'UN SIGNAL D'EXCITATION POUR UN CAPTEUR D'ANGLE DE ROTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.06.2015 DE 102015211263**

(43) Veröffentlichungstag der Anmeldung:
**25.04.2018 Patentblatt 2018/17**

(73) Patentinhaber: **Robert Bosch GmbH
70442 Stuttgart (DE)**

(72) Erfinder:
- **UNGERMANN, Michael
  64285 Darmstadt (DE)**
- **LECHNER, Benjamin
  75242 Neuhausen (DE)**
- **ZIRKEL, Daniel
  75446 Wiernsheim-Serres (DE)**
- **RAICHLE, Daniel
  71665 Vaihingen (DE)**

(56) Entgegenhaltungen:
**EP-A2- 0 921 387      EP-A2- 2 063 597
DE-A1-102011 006 131   DE-T2- 69 823 675**

## Beschreibung

Die vorliegende Erfindung betrifft eine Vorrichtung und ein Verfahren zum Plausibilisieren eines Erregersignals für einen Drehwinkelgeber. Insbesondere betrifft die vorliegende Erfindung eine Vorrichtung und ein Verfahren zum Plausibilisieren eines Erregersignals für einen Resolver.

Stand der Technik

Elektro- und Hybridfahrzeuge gewinnen zunehmend an Bedeutung. Zur Regelung von permanenterregten Synchronmaschinen (PSM) und elektrisch erregten Synchronmaschinen (ESM) wie sie in solchen Fahrzeugen eingesetzt werden, ist die Kenntnis des Rotorlagewinkels derartiger Maschinen erforderlich. Weiterhin ist zur Regelung von Asynchronmaschinen (ASM) die Kenntnisse der elektrischen Frequenz des Antriebs notwendig. Zur Ermittlung des Rotorlagewinkels bzw. der elektrischen Frequenz können verschiedene Sensorarten eingesetzt werden. Zum Beispiel sind Sensoren auf Basis des Wirbelstrom-Effekts, Resolver oder digitale Winkelgebersignale möglich.

Ein Resolver wird dabei beispielsweise mit einem sinusförmigen Erregersignal angeregt. Als Empfängersignale des Resolvers erhält man dabei in der Regel gestörte, amplitudenmodulierte Spannungen, aus deren Einhüllende die Information über die Rotorlage gewonnen werden kann. Typischerweise kommen Erregersignale mit einer Amplitude von zehn Volt und einer Frequenz der Sinusfunktion von zehn Kilohertz zum Einsatz.

Die Druckschrift EP 0 921 387 A2 offenbart ein Verfahren und eine Vorrichtung zum Prüfen von eingebauten Stoßdämpfern. Unter anderem wird ein Plausibilitätstest zur Elimination extremer, nicht berechenbarer, Fahrwerke durchgeführt.

Die deutsche Patentanmeldung DE 10 2011 078 583 A1 offenbart beispielsweise eine Auswertung von Resolver-Sensorsignalen in einem Fahrzeug. Ein Resolvernimmt hierzu eine Drehbewegung eines Rotors auf, und ein Prozessorelement verarbeitet die sinus- bzw. kosinusförmigen Ausgangssignale des Resolvers.

Das Erregersignal wird dem Resolver über eine Leistungselektronik bereitgestellt. Kommt es zu Abweichungen des tatsächlich bereitgestellten Erregersignals (Ist-Erregersignal) von einem bereitzustellenden Erregersignal (Soll-Erregersignal), kann dies zu Fehlern bei der Ermittlung des Rotorlagewinkels durch den Resolver führen.

Es besteht daher ein Bedarf nach einem Verfahren und einer Vorrichtung zum Plausibilisieren eines Erregersignals für einen Drehwinkelgeber, insbesondere einen Resolver.

Offenbarung der Erfindung

Hierzu schafft die vorliegende Erfindung eine Vorrichtung mit den Merkmalen des Patentanspruchs 1 und ein Verfahren mit den Merkmalen des Patentanspruchs 6.

Die Erfindung stellt dementsprechend eine Vorrichtung bereit, mit: einer Eingangssignalbereitstellungseinrichtung, welche dazu ausgelegt ist, ein Eingangssignal basierend auf dem zu plausibilisierenden Erregersignal bereitzustellen; einer Amplituden-Schätzeinrichtung, welche dazu ausgelegt ist, einen Amplituden-Schätzwert für eine Amplitude des Erregersignals basierend auf dem bereitgestellten Eingangssignal zu bestimmen; einer Phasenlage-Schätzeinrichtung, welche dazu ausgelegt ist, einen Phasenlage-Schätzwert für eine Phasenlage des Erregersignals basierend auf dem bereitgestellten Eingangssignal zu bestimmen; einer Diagnoseeinrichtung, welche dazu ausgelegt ist, ein Diagnosesignal basierend zumindest auf dem bestimmten Amplituden-Schätzwert und dem bestimmten Phasenlage-Schätzwert zu erzeugen; und einer Plausibilisierungseinrichtung, welche dazu ausgelegt ist, das Erregersignal basierend auf dem Diagnosesignal in Abhängigkeit von einem vorbestimmten Wertebereich für das Diagnosesignal zu plausibilisieren.

Der Drehwinkelgeber kann insbesondere zum Bestimmen eines Rotorlagewinkels einer Synchronmaschine ausgelegt sein. Unter einem Plausibilisieren des Erregersignals ist insbesondere ein Einstufen eines Werts des Erregersignals als plausibel, das heißt als hinreichend glaubwürdig, annehmbar und/oder ausreichend genau, zu verstehen. Beispielsweise kann vorgesehen werden, dass nur solche Empfängersignale des Resolvers für das Bestimmen des Rotorlagewinkels berücksichtigt werden, welche mit einem als plausibel eingestuften Erregersignal erzeugt wurden. Das Plausibilisieren kann ein Ausgeben eines Signals, welches die Plausibilität des ermittelten Signal indiziert, umfassen.

Die Erfindung stellt weiterhin ein Verfahren bereit, mit den Schritten: Bereitstellen eines Eingangssignals basierend auf dem zu plausibilisierenden Erregersignal; Bestimmen eines Amplituden-Schätzwerts für eine Amplitude des Erregersignals basierend auf dem bereitgestellten Eingangssignal; Bestimmen eines Phasenlage-Schätzwerts für eine Phasenlage des Erregersignals basierend auf dem bereitgestellten Eingangssignal; Erzeugen eines Diagnosesignals basierend zumindest auf dem bestimmten Amplituden-Schätzwert und dem bestimmten Phasenlage-Schätzwert; und Plausibilisieren des Erregersignals basierend auf dem Diagnosesignal in Abhängigkeit von einem vorbestimmten Wertebereich für das Diagnosesignal.

Das Bereitstellen des Eingangssignals kann insbesondere ein Empfangen eines analogen oder digitalen Erregersignals oder ein Abtasten eines analogen Erregersignals zum Erzeugen eines digitalen Eingangssignals umfassen.

Das Verfahren kann insbesondere kontinuierlich, beispielsweise einmal pro Periode des Erregersignals oder des Eingangssignals, durchgeführt werden.

Vorteile der Erfindung

Die Erfindung ermöglicht ein Plausibilisieren eines Erregersignals für einen Drehwinkelgeber in technisch besonders einfacher Weise. Das Erregersignal kann beispielsweise eine Amplitude zwischen fünf und fünfzehn, insbesondere zwischen acht und zwölf, besonders bevorzugt von zehn Volt aufweisen. Durch Plausibilisieren des Erregersignals können Empfängersignale des Resolvers, welche auf nicht plausiblen Erregersignalen basieren, bei der Bestimmung des Drehwinkels außer Acht gelassen werden. Dadurch erhöhen sich Zuverlässigkeit, Präzision und Akkuratheit einer Drehwinkelbestimmung. Ist ein akkurates Bestimmen des Winkels nicht möglich, kann eine Ersatzreaktion, beispielsweise das Abschalten des Antriebs eingeleitet werden.

Vorteilhaft kann der bestimmte Amplituden-Schätzwert zum Plausibilisieren einer Amplitude des Erregersignals verwendet werden. Es kann vorgesehen sein, dass das Erregersignal nur dann als plausibel eingestuft wird, wenn zumindest die Amplitude des Erregersignals als plausibel eingestuft wurde.

Vorteilhafte Ausführungsformen und Weiterbildungen ergeben sich aus den Unteransprüchen sowie aus der Beschreibung unter Bezugnahme auf die Figuren.

Erfindungsgemäß ist die Phasenlage-Schätzeinrichtung dazu ausgelegt, das Bestimmen des Phasenlage-Schätzwerts weiterhin basierend auf einer zu erwartenden Periodendauer des Erregersignals, d.h. einem Sollwert für die Periodendauer des Erregersignals, oder auf einer Periodendauer des Eingangssignals durchzuführen. Somit ist der Phasenlage-Schätzwert akkurater, das heißt näher an der tatsächlichen Phasenlage.

Gemäß einer weiteren vorteilhaften Weiterbildung ist die Phasenlage-Schätzeinrichtung dazu ausgelegt, einen Nulldurchgang des Eingangssignals zu ermitteln und das Bestimmen des Phasenlage-Schätzwerts weiterhin basierend auf dem ermittelten Nulldurchgang des Eingangssignals durchzuführen. Somit ist der Phasenlage-Schätzwert akkurater.

Erfindungsgemäß ist das Erregersignal - und somit auch das Eingangssignal - ein sinus- oder kosinusförmiges Signal. Die Diagnoseeinrichtung weist eine Recheneinheit auf, welche dazu ausgelegt ist, unter Verwendung des bestimmten Amplituden-Schätzwerts und des bestimmten Phasenlage-Schätzwerts ein in Bezug auf das Eingangssignal um neunzig Grad phasenverschobenes, aber dem Eingangssignal ansonsten gleiches Signal als Hilfssignal zu erzeugen. Ist das Erregersignal etwa ein sinusförmiges Signal, kann die Recheneinheit dazu ausgelegt sein, ein kosinusförmiges Signal mit derselben Frequenz und Amplitude als ein Hilfssignal zu erzeugen. Ist das Erregersignal etwa ein kosinusförmiges Signal, kann die Recheneinheit dazu ausgelegt sein, ein sinusförmiges Signal als Hilfssignal zu erzeugen. Die Diagnoseeinrichtung ist dazu ausgelegt, das Diagnosesignal basierend auf einem Quadrat des Eingangssignals sowie auf einem Quadrat des erzeugten Hilfssignals, z.B. des erzeugten kosinusförmigen Signals, oder alternativ des erzeugten sinusförmigen Signals, zu erzeugen. Somit kann ein aussagekräftes Diagnosesignal mit geringem technischen Aufwand erzeugt werden.

Gemäß einer weiteren vorteilhaften Weiterbildung ist die Diagnoseeinrichtung dazu ausgelegt, das Diagnosesignal basierend auf einer Summe des Quadrats des Eingangssignals und des Quadrats des erzeugten Hilfssignals, z.B. des erzeugten kosinusförmigen oder sinusförmigen Signals zu erzeugen. Somit kann ein aussagekräftes Diagnosesignal mit geringem technischen Aufwand erzeugt werden.

Gemäß einer vorteilhaften Weiterbildung des erfindungsgemäßen Verfahrens basiert das Bestimmen des Phasenlage-Schätzwerts weiterhin auf einer zu erwartenden Periode des Erregersignals. Gemäß einer weiteren vorteilhaften Weiterbildung umfasst das Bestimmen des Phasenlage-Schätzwerts ein Ermitteln eines Nulldurchgangs des Eingangssignals. Das Bestimmen des Phasenlage-Schätzwerts kann auf dem ermittelten Nulldurchgang des Eingangssignals basieren.

Kurze Beschreibung der Zeichnungen

Die vorliegende Erfindung wird nachfolgend anhand der in den schematischen Figuren der Zeichnungen dargestellten Ausführungsbeispiele näher erläutert. Es zeigen:

Fig. 1 ein schematisches Blockschaltbild eines elektrischen Antriebssystems gemäß einer Ausführungsform der vorliegenden Erfindung;

Fig. 2 eine schematische Darstellung einer Vorrichtung zum Plausibilisieren eines Erregersignals für einen Drehwinkelgebers gemäß einer weiteren Ausführungsform der vorliegenden Erfindung; und

Fig. 3 ein schematisches Flussdiagramm zum Erläutern eines Verfahrens zum Plausibilisieren eines Erregersignals für einen Drehwinkelgebers gemäß noch einer weiteren Ausführungsform der vorliegenden Erfindung.

In allen Figuren sind gleiche bzw. funktionsgleiche Elemente und Vorrichtungen - sofern nichts anderes angegeben ist - mit denselben Bezugszeichen versehen. Die Nummerierung von Verfahrensschritten dient der Übersichtlichkeit und soll insbesondere nicht, sofern nichts anderes angegeben ist, eine bestimmte zeitliche Reihenfolge implizieren. Insbesondere können auch mehrere Verfahrensschritte gleichzeitig durchgeführt werden.

Beschreibung der Ausführungsbeispiele

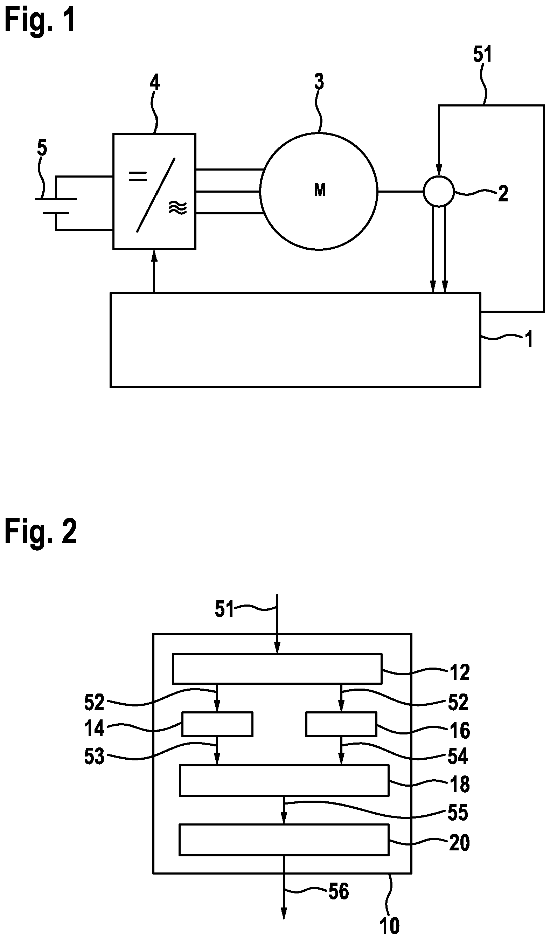

Fig. 1 zeigt ein schematisches Blockschaltbild eines elektrischen Antriebssystems gemäß einer Ausführungsform. Eine elektrische Maschine 3 wird von einer elektrischen Energiequelle 5 über einen Stromrichter 4 gespeist. Beispielsweise kann sich bei der elektrischen Energiequelle 5 um eine Traktionsbatterie eines Elektrofahrzeugs handeln. Bei der elektrischen Maschine 3 kann es sich beispielsweise um eine permanent erregte Synchronmaschine, eine elektrische erregte Synchronmaschine oder aber auch um eine Asynchronmaschine handeln. Grundsätzlich sind darüber hinaus auch andere elektrische Maschinen möglich. Die hier dargestellte Ausführungsform einer dreiphasigen elektrischen Maschine 3 stellte dabei nur eine beispielhafte Ausführungsform dar. Darüber hinaus sind auch elektrische Maschinen mit einer von drei abweichenden Anzahl von Phasen möglich. Der Stromrichter 4 konvertiert die von der elektrischen Energiequelle 5 bereitgestellte elektrische Energie und stellt die konvertierte elektrische Energie zur Ansteuerung der elektrischen Maschine 3 bereit. Die Ansteuerung der elektrischen Maschine 3 kann dabei basierend auf Vorgaben bzw. Steuersignalen von einer Steuervorrichtung 1 erfolgen. Darüber hinaus kann beim Abbremsen der elektrischen Maschine 3 auch kinetische Energie durch die elektrische Maschine 3 in elektrische Energie umgewandelt werden und diese elektrische Energie über den Stromrichter 4 in einen elektrischen Energiespeicher der Energiequelle 5 eingespeist werden.

Für die Regelung einer permanent- oder elektrisch erregten Synchronmaschine ist die Kenntnis der Lage des Rotors in dieser Maschine erforderlich. Ferner ist für die Regelung von Asynchronmaschinen die Kenntnis der elektrischen Frequenz einer solchen Maschine notwendig. Hierzu kann die elektrische Maschine 3 mit einem Drehwinkelgeber 2 gekoppelt werden. Beispielsweise kann der Drehwinkelgeber 2 mit der Antriebsachse der elektrischen Maschine 3 gekoppelt werden. Beispielsweise sind zur Bestimmung der Rotorlage und/oder der elektrischen Frequenz der Maschine 3 Sensoren auf Basis des Wirbelstrom-Effekts, digitale Winkelgebersignale oder sogenannte Resolver möglich.

In einem Resolver sind in der Regel in einem Gehäuse zwei um 90° elektrisch versetzte Statorwicklungen angeordnet, die einen in dem Gehäuse gelagerten Rotor mit einer Rotorwicklung umschließen. Grundsätzlich sind verschiedene Alternativen zur Ermittlung der Winkellage möglich, von denen nachfolgend exemplarisch eine Möglichkeit beschrieben wird. Beispielsweise kann die Rotorwicklung mit einem Erregersignal 51 in Form einer sinusförmigen Wechselspannung angeregt werden. Die Amplituden der in den beiden Statorwicklungen induzierten Spannungen sind dabei abhängig von der Winkellage des Rotors und entsprechen dem Sinus der Winkellage des Rotors und dem Kosinus der Winkellage des Rotors. Somit kann die Winkellage des Rotors aus dem Arkustangens (arctan) der einhüllenden Signale der beiden Statorwicklungen berechnet werden.

Die Ermittlung der Winkellage des Rotors bzw. der elektrischen Frequenz erfolgt dabei in der Steuervorrichtung 1. Die Steuervorrichtung 1 umfasst eine erfindungsgemäße Vorrichtung 10 zum Plausibilisieren des Erregersignals 51 für den Drehwinkelgeber 2, wie sie anhand von Fig. 2 näher erläutert wird.

Fig. 2 zeigt eine schematische Darstellung einer Vorrichtung 10 zum Plausibilisieren eines Erregersignals 51 für den Drehwinkelgeber 2. Die Vorrichtung 10 kann hardwaremäßig oder softwaremäßig oder durch eine Kombination aus Hardware und Software realisiert sein.

Die Vorrichtung 10 umfasst eine Eingangssignaleinrichtung 12, welche dazu ausgelegt ist, basierend auf dem Erregersignal 51 ein Eingangssignal 52 bereitzustellen. Dazu ist das Erregersignal 51 an die Eingangssignaleinrichtung 12 anlegbar oder von der Eingangssignaleinrichtung 12 abgreifbar.

Das Erregersignal 51 hat beispielsweise die Form

$$U_{Exc}(t) = U_{ExcAmp} \sin(2\pi f_{Exc} t + \gamma),$$

wobei $U_{ExcAmp}$ eine Amplitude, $f_{Exc}$ eine Frequenz und $y$ eine Phasenlage des Erregersignals 51 bezeichnet.

Die Eingangssignaleinrichtung 12 kann eine hardwarebasierte oder softwarebasierte Filtereinheit umfassen, welche dazu ausgelegt ist, das Erregersignal 51 zu filtern. Die Eingangssignaleinrichtung 12 kann weiterhin eine Analog-Digital-Wandlereinheit umfassen, welche dazu ausgelegt ist, das gefilterte Erregersignal zu Zeitpunkten $t_k$ abzutasten, um als Eingangssignal 52 eine Folge $U_{Ein}(t_k) = U_{ExcAmp} \sin(2\pi f_{Exc} t_k + \gamma)$ zu erzeugen. Eine Abtastfrequenz des Abtastens des Erregersignals 51 durch die Analog-Digital-Wandlereinheit kann vorteilhaft der angestrebten Frequenz $f_{Exc}$ des Erregersignals 51 angepasst sein, welche auch als Erregerfrequenz bezeichnet werden kann. Beispielsweise kann die Abtastfrequenz auf ein Vielfaches, insbesondere mindestens ein Fünffaches, bevorzugt mindestens ein Zehnfaches, der Erregerfrequenz angepasst sein. Bei einer üblichen Erregerfrequenz von zehn Kilohertz kann zum Beispiel eine Abtastfrequenz von einhundert Kilohertz gewählt werden. In diesem Fall werden je Periode des Erregersignals 51 zehn Abtastwerte durch die Analog-Digital-Wandlereinheit erfasst und das Eingangssignal 52 mit 10 diskreten Werten pro Periode des Erregersignals 51 erzeugt.

Eine Amplituden-Schätzeinrichtung 14 der Vorrichtung 10 ist dazu ausgelegt, einen Amplituden-Schätzwert 53 für die Amplitude $U_{ExcAmp}$ des Erregersignals 51 basierend auf dem erzeugten Eingangssignal 52 zu bestimmen.

Beispielsweise kann die Amplituden-Schätzeinrichtung 14, oder die Vorrichtung 10, eine Maximum-Bestimmungseinheit und eine Minimum-Bestimmungseinheit aufweisen, welche dazu ausgebildet sind, innerhalb einer vorbestimmten Anzahl N von zeitlich vorangehenden Abtastwerten des Eingangssignals 52 einen Maximalwert bzw. einen Minimalwert zu ermitteln. Die vorbestimmte Anzahl N kann insbesondere auf eine Zahl von Abtastwerten pro Periode des Erregersignals 51 festgelegt werden, beispielsweise auf zehn, d.h. N=10. Die Amplituden-Schätzeinrichtung 14, oder die Vorrichtung 10, kann eine Amplituden-Recheneinheit aufweisen, welche dazu ausgebildet ist, eine halbierte Differenz zwischen dem ermittelten Maximalwert und dem ermittelten Minimalwert zu berechnen und als Amplituden-Schätzwert 53 für die Amplitude $U_{ExcAmp}$ des Erregersignals 51 auszugeben.

Mit anderen Worten kann ein als $\hat{U}_{ExcAmp}(t_k)$ bezeichneter Amplituden-Schätzwert 53 als

$$\hat{U}_{ExcAmp}(t_k) = \frac{1}{2}\left(\max_{n\in[0,..,N-1]} U_{Ein}(t_{k-n}) - \min_{n\in[0,..,N-1]} U_{Ein}(t_{k-n})\right)$$

bestimmt werden, wobei das Argument $t_k$ des Amplituden-Schätzwerts 53 bedeutet, dass der Amplituden-Schätzwert 53 zum Zeitpunkt $t_k$ gültig ist. Bevorzugt wird der Amplituden-Schätzwert 53 genau einmal pro Periode des Erregersignals 51 oder des Eingangssignals 52 bestimmt. Hierdurch kann das Bestimmen numerisch effizienter umgesetzt werden. Der Amplituden-Schätzeinrichtung 14 kann hierzu eine Information über die Periode des Erregersignals 51, etwa durch die Steuervorrichtung 10, übermittelt werden. Alternativ kann der Amplituden-Schätzwert 53 aber auch zu jedem Abtastzeitpunkt $t_k$ bestimmt werden. Als Amplituden-Schätzwert 53 kann auch ein Mittelwert der N einzelnen pro Periode bestimmten Amplituden-Schätzwerte bestimmt werden.

Die Vorrichtung 10 kann eine Amplituden-Plausibilisierungseinrichtung umfassen, welche dazu ausgelegt, ist, eine Amplitude des Erregersignals 51 basierend auf dem bestimmten Amplituden-Schätzwert 53 zu plausibilisieren, d. h. als plausibel oder annehmbar einzustufen, wenn der bestimmte Amplituden-Schätzwert 53 innerhalb eines vorbestimmten Amplitudenbereichs liegt, insbesondere unterhalb einem vorbestimmten Amplituden-Schwellwert $\delta$ liegt. Der vorbestimmte Amplituden-Schwellenwert $\delta$ ist insbesondere unter Berücksichtigung von systematischen Schätzfehlern zu bestimmen. Auch der Einsatz von anderen Verfahren zur Bestimmung der Amplituden, beispielsweise Recursive-leastsquares-Schätzern ist denkbar.

Die Vorrichtung 10 umfasst weiterhin eine Phasenlage-Schätzeinrichtung 16, welche dazu ausgelegt ist, einen Phasenlage-Schätzwert 54 für die Phasenlage y des Erregersignals 51 basierend auf dem bereitgestellten Eingangssignal 52 zu bestimmen.

Die Phasenlage-Schätzeinrichtung 16, oder die Vorrichtung 10, weisen dazu eine Nulldurchgangs-Ermittlungseinheit auf, mittels welcher ein faktischer oder interpolierter Nulldurchgang des Eingangssignals 52 ermittelbar ist und eine Geraden-Berechnungseinheit auf, mittels welcher eine Gerade berechenbar ist.

Dazu wird durch die Nulldurchgangs-Ermittlungseinheit ein Zeitpunkt $t_{BZRE}$ ermittelt, zu welchem das Eingangssignal 52 negativ ist und auf welchen, ohne weitere Abtastzeitpunkte $t_k$ dazwischen, ein Zeitpunkt $t_{BZRE+1}$ folgt, zu welchem das Eingangssignal 52 positiv ist, d.h. es wird ein Nulldurchgang mit positiver Steigung ermittelt. Mittels der Geraden-Berechnungseinheit wird basierend auf dem ermittelten Zeitpunkt $t_{BZRE}$ eine Ausgleichsgerade $G(t)$ als

$$G(t) = \frac{U_{Ein}(t_{BZRE+1}) - U_{Ein}(t_{BZRE})}{t_{BZRE+1} - t_{BZRE}} t + U_{Ein}(t_{BZRE})$$

berechnet. Durch die Ausgleichsgerade G(t) kann das Erregersignal 52 an dem Nulldurchgang linear approximiert werden. Alternativ wird durch die Nulldurchgangs-Ermittlungseinheit ein Zeitpunkt $t_{BZRE}$ ermittelt, zu welchem das Eingangssignal 52 positiv ist und auf welchen, ohne weitere Abtastzeitpunkte $t_k$ dazwischen, ein Zeitpunkt $t_{BZRE+1}$ folgt, zu welchem das Eingangssignal 52 negativ ist, d.h. es wird ein Nulldurchgang mit negativer Steigung ermittelt. Auch eine Kombination von einem Ermitteln von Nulldurchgängen mit positiver und mit negativer Steigung ist möglich.

Die Phasenlage-Schätzeinrichtung 16 ist weiterhin dazu ausgelegt, die Ausgleichsgerade G(t) nach einem Zeitpunkt $t_{ZC}$ des Nulldurchgangs des Erregersignals 51 aufzulösen, wobei die Formel verwendet werden kann:

$$t_{ZC}(t_k) = -U_{Ein}(t_{BZRE}) \frac{t_{BZRE+1} - t_{BZRE}}{U_{Ein}(t_{BZRE+1}) - U_{Ein}(t_{BZRE})}$$

Das Argument $t_k$ von $t_{ZC}$ oder einer anderen Funktion bedeutet hier, im Vorangehenden und im Folgenden, dass der ermittelte Wert, hier $t_{ZC}$, der zum Zeitpunkt $t_k$ zeitlich letzte, das heißt neueste, gültige Wert ist. Somit ist $t_{ZC}(t_k)$ der letzte zum Zeitpunkt $t_k$ gültige Zeitpunkt des entsprechenden positiven oder negativen Nulldurchgangs gemäß der Defintion von $t_{BZRE}$. Der Phasenlage-Schätzeinrichtung 16 kann zudem eine zu erwartende Dauer $T_{Exc} = \frac{1}{f_{Exc}}$ einer Periode des Erregersignals 51 bereitgestellt werden, beispielsweise durch die Steuervorrichtung 1. Bei der zu erwartenden Dauer kann es sich insbesondere um die zum Erregen des Resolvers 2 angestrebte Dauer der Periode des Erregersignals 51 handeln. Die Dauer der Periode kann auch durch die Phasenlage-Schätzeinrichtung 16 basierend auf einer der Phasenlage-Schätzeinrichtung 16 übermittelten Erregerfrequenz berechnet werden.

Der Phasenlage-Schätzeinrichtung 16 ist weiterhin dazu ausgelegt, den Phasenlage-Schätzwert 54 als einen, basierend auf einem Zeitpunkt des Nulldurchgangs des Erregersignals 51, Bruchteil einer vollen Periode des Erregersignals 51 zu bestimmen.

Der Phasenlage-Schätzwert 54 kann, wenn er, zum Zeitpunkt $t_k$ gültig, als $\hat{\gamma}(t_k)$ bezeichnet wird, durch die Phasenlage-Schätzeinrichtung 16 bestimmt werden als $\hat{\gamma}(t_k) = 2\pi \frac{t_{ZC}(t_k)}{T_{Exc}}$.

Die Vorrichtung 10 umfasst weiterhin eine Diagnoseeinrichtung 18, welche dazu ausgelegt ist, ein Diagnosesignal 55 basierend zumindest auf dem bestimmten Amplituden-Schätzwert 53 und dem bestimmten Phasenlage-Schätzwert 54 zu erzeugen.

Dazu kann die Diagnoseeinrichtung 18 eine Recheneinheit aufweisen, welche dazu ausgelegt ist, unter Verwendung des bestimmten Amplituden-Schätzwerts 53 und des bestimmten Phasenlage-Schätzwerts 54 ein kosinusförmiges Signal zu erzeugen. Das kosinusförmige Signal weist als Amplitude den als $\hat{U}_{ExcAmp}$ bezeichneten Amplituden-Schätzwert 53, als Frequenz die Erregerfrequenz $f_{Exc}$ des Erregersignals 51 und als Phasenlage den als $\hat{\gamma}(t_k)$ bezeichneten

Phasenlage-Schätzwert 54 auf. Das kosinusförmige Signal kann somit, wenn es, zum Zeitpunkt $t_k$ gültig, als $U_{SynCos}(t_k)$ bezeichnet wird, als

$$U_{SynCos}(t_k) = \hat{U}_{ExcAmp}(t_k) \cos(2\pi f_{Exc} t_k + \hat{\gamma}(t_k))$$

erzeugt werden. Numerisch vorteilhaft im Hinblick auf einen Speicherbedarf der Diagnoseeinrichtung 18 kann das kosinusförmige Signal, statt durch Aufrufen einer Kosinusfunktion, durch Addition von $\pi/2$ und Aufruf einer Sinusfunktion, welche in der Vorrichtung 10 bereits hinterlegt sein kann, erzeugt werden.

Die Diagnoseeinrichtung 18 kann basierend auf dem erzeugten kosinusförmigen Signal und basierend auf dem ermittelten, sinusförmigen Eingangssignal 52, ein Diagnosesignal 55 erzeugen, insbesondere als Differenz aus einem Quotienten, dessen Dividend eine Summe eines Quadrats des kosinusförmigen Signals und eines Quadrats des sinusförmigen Eingangssignals 52 ist und dessen Divisor das Quadrat des Amplituden-Schätzwerts 53 ist, und dem Wert eins erzeugen.

Somit kann das, zum Zeitpunkt $t_k$ gültig, als $U_{Clkshp}(t_k)$ bezeichnete Diagnosesignal 55, als

$$U_{ClkShp}(t_k) = \frac{\left(U_{SynCos}(t_k)\right)^2 + \left(U_{Ein}(t_k)\right)^2}{\left(\hat{U}_{ExcAmp}(t_k)\right)^2} - 1$$

erzeugt werden.

Vorteilhafterweise ist das Diagnosesignal 55 bei einer korrekten, das heißt genau zutreffenden, Schätzung der Amplitude und der Phasenlage, das heißt falls $\hat{U}_{ExcAmp}(t_k) = U_{ExcAmp}$ und falls $\hat{\gamma}(t_k) = \gamma$, genau null, wie sich durch Einsetzen und Verwenden des trigonometrischen Additionstheorems $\sin^2 + \cos^2 = 1$ zeigen lässt.

Die Vorrichtung 10 umfasst weiterhin eine Plausibilisierungseinrichtung 20, welche dazu ausgelegt ist, das Erregersignal 51 zu plausibilisieren, d.h. als korrekt einzustufen, falls das Diagnosesignal 55 in einem vorbestimmten Wertebereich liegt. Die Plausibilisierungseinrichtung 20 kann dazu ausgelegt sein, ein Plausibilisierungssignal 56 auszugeben, welche indiziert, ob das Erregersignal 51 zum aktuellen - oder einem vorangehenden, relativ zu dem aktuellen Zeitpunkt festgelegten - Zeitpunkt als plausibel eingestuft wurde oder nicht. Beispielsweise kann das Plausibilisierungssignal 56 eine logische Eins sein, falls das Erregersignal 51 als plausibel eingestuft wurde und eine logische Null sein, falls das Erregersignal 51 durch die Plausibilisierungseinrichtung 20 nicht als plausibel, das heißt als unplausibel, eingestuft wurde.

Insbesondere ist die Plausibilisierungseinrichtung 20 dazu ausgelegt, das Erregersignal 51 höchstens dann zu plausibilisieren, falls ein Betrag eines Werts des Diagnosesignals 55 zu einem Zeitpunkt $t_k$, an welchem das Erregersignal 51 plausibilisiert werden soll, unterhalb einem vorbestimmten Diagnose-Schwellwert $\sigma$ liegt, das heißt, falls $|U_{ClkShp}(t_k)| < \sigma$ ist. Beispielsweise wird das Erregersignal 51 zum Zeitpunkt $t_k$ genau dann plausibilisiert, wenn der Betrag des Werts des Diagnosesignals 51 zum Zeitpunkt $t_k$ kleiner als der Diagnose-Schwellwert $\sigma$ ist, $|U_{ClkShp}(t_k)| < \sigma$, und nicht plausibilisiert, wenn der Betrag des Werts des Diagnosesignals 51 zum Zeitpunkt $t_k$ größer oder gleich dem Diagnose-Schwellwert $\sigma$ ist, $|U_{ClkShp}(t_k)| \geq \sigma$.

Bevorzugt wird das Erregersignal 51 zum Zeitpunkt tk nur dann plausibilisiert, wenn sowohl der Amplituden-Schätzwert 53 innerhalb eines vorbestimmten Bereichs liegt, beispielsweise unter dem Amplituden-Schwellwert liegt, und gleichzeitig der Betrag des Werts des Diagnosesignals 51 zum Zeitpunkt $t_k$ kleiner als der Diagnose-Schwellwert $\sigma$ ist.

Der Diagnose-Schwellwert $\sigma$ kann unter Berücksichtigung systematischer Schätzfehler beim Bestimmen des Phasenlage-Schätzwerts 54 und des Amplituden-Schätzwerts 53 festgelegt werden. Es kann ein fixer Diagnose-Schwellwert $\sigma$ verwendet werden. Alternativ kann ein variabler Diagnose-Schwellwert $\sigma$, beispielsweise ein von dem Amplituden-Schätzwert 53, insbesondere von dem Quadrat des Amplituden-Schätzwerts 53, abhängiger Diagnose-Schwellwert $\sigma$ verwendet werden.

Dies ist insbesondere vorteilhaft, wenn ein, alternativ zu dem zuvor beschriebenen Diagnosesignal 56, ein alternatives Diagnosesignal 56 durch die Diagnoseeinrichtung 18 erzeugt wird als

$$U_{ClkShp}(t_k) = \left( U_{SynCos}(t_k) \right)^2 + \left( U_{Ein}(t_k) \right)^2 - \left( \widehat{U}_{ExcAmp}(t_k) \right)^2,$$

was aus einem Multiplizieren des zuvor beschriebenen Diagnosesignals mit dem Quadrat des Amplituden-Schätzwerts 53 des Eingangssignals 52 hervorgeht. Bei Verwenden des alternativen Diagnosesignals, insbesondere in Verbindung mit einem von dem Amplituden-Schätzwert 53 abhängigen Diagnose-Schwellwert $\sigma$, kann numerisch vorteilhaft eine Division eingespart werden, wodurch die Diagnoseeinrichtung 18 weniger komplex ausgebildet werden kann.

Sowohl das zuerst beschriebene Diagnosesignal als auch das alternative Diagnosesignal sind sowohl ein Maß für eine Sinusförmigkeit des Erregersignals 51 als auch ein Maß für eine Abweichung einer tatsächlichen Frequenz des Erregersignals 51 von der angestrebten Erregerfrequenz. Die Vorrichtung 10 ist somit auch als Vorrichtung zum Diagnostizieren einer Sinusförmigkeit eines Erregersignals als auch als eine Vorrichtung zum Diagnostizieren einer Frequenzabweichung eines Erregersignals bezeichenbar.

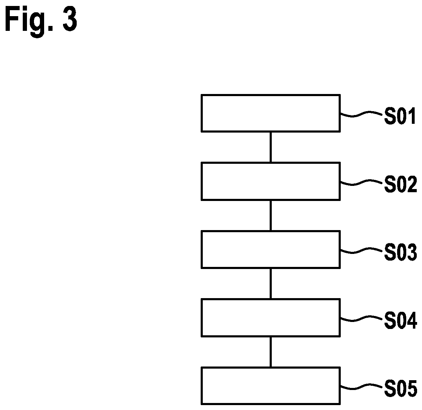

Fig. 3 zeigt ein schematisches Flussdiagramm zum Erläutern eines Verfahrens zum Plausibilisieren eines Erregersignals für einen Drehwinkelgeber gemäß noch einer weiteren Ausführungsform der vorliegenden Erfindung. Das Verfahren gemäß Fig. 3 ist insbesondere mit einer Vorrichtung gemäß Fig. 2 ausführbar und kann in Hinsicht auf alle im Zusammenhang mit der erfindungsgemäßen Vorrichtung beschriebenen Varianten und Weiterbildungen angepasst werden.

In einem Schritt S01 wird ein Eingangssignal 52 basierend auf dem zu plausibilisierenden Erregersignal 51 bereitgestellt. In einem Schritt S02 wird ein Amplituden-Schätzwert 53 für eine Amplitude des Erregersignals 51 basierend auf dem bereitgestellten Eingangssignal 52 bestimmt. In einem Schritt S03 wird ein Phasenlage-Schätzwert 54 für eine Phasenlage des Erregersignals 51 basierend auf dem bereitgestellten Eingangssignal 52 bestimmt.

In einem Schritt S04 wird ein Diagnosesignal 55 basierend zumindest auf dem bestimmten Amplituden-Schätzwert 53 und dem bestimmten Phasenlage-Schätzwert 54 erzeugt. In einem Schritt S05 wird das Erregersignal 51 plausibilisiert, d.h. als plausibel eingestuft, falls das Diagnosesignal 55 in einem vorbestimmten Wertebereich liegt. Optional kann, wenn das Erregersignal 51 plausibilisiert wird, ein Plausibilisierungssignal 56 ausgegeben werden, welches indiziert, dass das Erregersignal 51 als plausibel eingestuft wurde.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung, die durch die Ansprüche definiert ist, abzuweichen.

**Patentansprüche**

1. Vorrichtung (10) zum Plausibilisieren eines sinusförmigen oder kosinusförmigen Erregersignals (51) für einen Drehwinkelgeber, mit:

einer Eingangssignaleinrichtung (12), welche dazu ausgelegt ist, ein Eingangssignal (52) basierend auf dem zu plausibilisierenden Erregersignal (51) bereitzustellen;

einer Amplituden-Schätzeinrichtung (14), welche dazu ausgelegt ist, einen Amplituden-Schätzwert (53) für eine Amplitude des Erregersignals (51) basierend auf dem bereitgestellten Eingangssignal (52) zu bestimmen;

einer Phasenlage-Schätzeinrichtung (16), welche dazu ausgelegt ist, einen Phasenlage-Schätzwert (54) für eine Phasenlage des Erregersignals (51) basierend auf dem bereitgestellten Eingangssignal (52) und basierend auf einer zu erwartenden Periode des Erregersignals (51) zu bestimmen;

einer Diagnoseeinrichtung (18), welche eine Recheneinheit aufweist, welche dazu ausgelegt ist, unter Verwendung des bestimmten Amplituden-Schätzwerts (53) und des bestimmten Phasenlage-Schätzwerts (54) ein in Bezug auf das Eingangssignal (52) um neunzig Grad phasenverschobenes, dem Eingangssignal (52) ansonsten gleiches Hilfssignal zu erzeugen, wobei die Diagnoseeinrichtung (18) dazu ausgelegt ist, ein Diagnosesignal (55) basierend auf einem Quadrat des Eingangssignals (52) sowie basierend auf einem Quadrat des erzeugten Hilfssignals zu erzeugen; und

einer Plausibilisierungseinrichtung (20), welche dazu ausgelegt ist, das Erregersignal (51) basierend auf dem Diagnosesignal (55) in Abhängigkeit von einem vorbestimmten Wertebereich für das Diagnosesignal (55) als plausibel oder unplausibel einzustufen.

2. Vorrichtung (10) nach Anspruch 1,
wobei die Phasenlage-Schätzeinrichtung (16) dazu ausgelegt ist, einen Nulldurchgang des Eingangssignals (52) zu ermitteln und das Bestimmen (S03) des Phasenlage-Schätzwerts (54) weiterhin basierend auf dem ermittelten Nulldurchgang des Eingangssignals (52) durchzuführen.

3. Vorrichtung nach Anspruch 1 oder 2,
wobei die Diagnoseeinrichtung (18) dazu ausgelegt ist, das Diagnosesignal (55) basierend auf einer Summe des Quadrats des Eingangssignals (52) und des Quadrats des erzeugten Hilfssignals zu erzeugen.

4. Verfahren zum Plausibilisieren eines sinusförmigen oder kosinusförmigen Erregersignals (51) für einen Drehwinkelgeber, mit den Schritten:

Bereitstellen (S01) eines Eingangssignals (52) basierend auf dem zu plausibilisierenden Erregersignal (51);

Bestimmen (S02) eines Amplituden-Schätzwerts (53) für eine Amplitude des Erregersignals (51) basierend auf dem bereitgestellten Eingangssignal (52);

Bestimmen (S03) eines Phasenlage-Schätzwerts (54) für eine Phasenlage des Erregersignals (51) basierend auf dem bereitgestellten Eingangssignal (52) und basierend auf einer zu erwartenden Periode des Erregersignals (51);

Erzeugen eines in Bezug auf das Eingangssignal (52) um neunzig Grad phasenverschobenen, dem Eingangssignal (52) ansonsten gleichen Hilfssignals unter Verwendung des bestimmten Amplituden-Schätzwerts (53) und des bestimmten Phasenlage-Schätzwerts (54);

Erzeugen (S04) eines Diagnosesignals (55) basierend auf einem Quadrat des Eingangssignals (52) sowie basierend auf einem Quadrat des erzeugten Hilfssignals; und

Einstufen (S05) des Erregersignals (51) als plausibel oder als unplausibel basierend auf dem Diagnosesignal (55) in Abhängigkeit von einem vorbestimmten Wertebereich für das Diagnosesignal (55).

5. Verfahren nach Anspruch 4,
wobei das Bestimmen (S03) des Phasenlage-Schätzwerts (54) ein Ermitteln eines Nulldurchgangs des Eingangssignals (52) umfasst; und wobei das Bestimmen (S03) des Phasenlage-Schätzwerts (54) weiterhin auf dem ermittelten Nulldurchgang des Eingangssignals (52) basiert.

6. Verfahren nach Anspruch 4 oder 5, wobei das Diagnosesignal (55) auf einer Summe des Quadrats des Eingangssignals (52) und des Quadrats des erzeugten Hilfssignals basiert.

## Claims

1. Apparatus (10) for checking the plausibility of a sinusoidal or cosinusoidal excitation signal (51) for a rotary encoder, comprising:

an input signal device (12) which is designed to supply an input signal (52) based on the excitation signal (51) of which the plausibility is to be checked;

an amplitude estimation device (14) which is designed to determine an estimated amplitude value (53) for an amplitude of the excitation signal (51) based on the supplied input signal (52);

a phase angle estimation device (16) which is designed to determine an estimated phase angle value (54) for a phase angle of the excitation signal (51) based on the supplied input signal (52) and based on an expected period of the excitation signal (51);

a diagnosis device (18) which has a computer unit which is designed to generate an auxiliary signal, which is phase-shifted through ninety degrees in relation to the input signal (52) and is otherwise identical to the input signal (52), using the determined estimated amplitude value (53) and the determined estimated phase angle value (54), wherein the diagnosis device (18) is designed to generate a diagnosis signal (55) based on a square of the input signal (52) and also based on a square of the generated auxiliary signal; and

a plausibility checking device (20) which is designed to classify the excitation signal (51) as plausible or implausible based on the diagnosis signal (55) depending on a predetermined value range for the diagnosis signal (55).

2. Apparatus (10) according to Claim 1,
wherein the phase angle estimation device (16) is designed to ascertain a zero crossing of the input signal (52) and to carry out the process of determining (S03) the estimated phase angle value (54) further based on the ascertained zero crossing of the input signal (52).

3. Apparatus according to Claim 1 or 2,
wherein the diagnosis device (18) is designed to generate the diagnosis signal (55) based on a sum of the square of the input signal (52) and of the square of the generated auxiliary signal.

4. Method for checking the plausibility of a sinusoidal or cosinusoidal excitation signal (51) for a rotary encoder, comprising the steps of:

supplying (S01) an input signal (52) based on the excitation signal (51) of which the plausibility is to be checked;

determining (S02) an estimated amplitude value (53) for an amplitude of the excitation signal (51) based on the supplied input signal (52);

determining (S03) an estimated phase angle value (54) for a phase angle of the excitation signal (51) based on the supplied input signal (52) and based on an expected period of the excitation signal (51);

generating an auxiliary signal, which is phase-shifted through ninety degrees in relation to the input signal (52) and is otherwise identical to the input signal (52), using the determined estimated amplitude value (53) and the determined estimated phase angle value (54) ;

generating (S04) a diagnosis signal (55) based on a square of the input signal (52) and also based on a square of the generated auxiliary signal; and

classifying (S05) the excitation signal (51) as plausible or as implausible based on the diagnosis signal (55) depending on a predetermined value range for the diagnosis signal (55).

5. Method according to Claim 4,
wherein determining (S03) the estimated phase angle value (54) comprises ascertaining a zero crossing of the input signal (52); and wherein determining (S03) the estimated phase angle value (54) is further based on the ascertained zero crossing of the input signal (52).

6. Method according to Claim 4 or 5,
wherein the diagnosis signal (55) is based on a sum of the square of the input signal (52) and of the square of the generated auxiliary signal.

**Revendications**

1. Dispositif (10) pour vérifier la plausibilité d'un signal d'excitation sinusoïdal ou cosinusoïdal (51) pour un capteur d'angle de rotation, comportant :

un système de signal d'entrée (12), qui est configuré pour délivrer un signal d'entrée (52) sur la base du signal d'excitation (51) dont la plausibilité doit être vérifiée ;

un système d'estimation d'amplitudes (14), qui est configuré pour déterminer une valeur d'estimation d'amplitudes (53) pour une amplitude du signal d'excitation (51) sur la base du signal d'entrée (52) délivré ;

un système d'estimation de position de phase (16), qui est configuré pour déterminer une valeur d'estimation de position de phase (54) pour une position de phase du signal d'excitation (51) sur la base du signal d'entrée (52) délivré et sur la base d'une période prévue du signal d'excitation (51) ;

un système de diagnostic (18), qui comporte une unité de calcul configurée pour produire, par utilisation de la valeur d'estimation d'amplitude (53) déterminée et de la valeur d'estimation de position de phase (54) déterminée, un signal auxiliaire déphasé de 90 degrés par rapport au signal d'entrée (52) ou sinon égal au signal d'entrée (52), dans lequel le système de diagnostic (18) est configuré pour produire un signal de diagnostic (55) sur la base d'un carré du signal d'entrée (52) et sur la base d'un carré du signal auxiliaire produit ; et

un système de vérification de plausibilité (20), qui est configuré pour classer le signal d'excitation (51) comme étant plausible ou non plausible sur la base du signal de diagnostic (55) en fonction d'une plage de valeurs prédéterminée pour le signal de diagnostic (55).

2. Dispositif (10) selon la revendication 1,
dans lequel le système d'estimation de phase (16) est configuré pour déterminer un passage à zéro du signal d'entrée (52) et pour effectuer la détermination (S03) de la valeur d'estimation de phase (54) sur la base, en outre, du passage à zéro déterminé du signal d'entrée (52) .

3. Dispositif selon la revendication 1 ou 2,
dans lequel le système de diagnostic (18) est configuré pour produire le signal de diagnostic (55) sur la base d'une somme du carré du signal d'entrée (52) et du carré du signal auxiliaire produit.

4. Procédé pour vérifier la plausibilité d'un signal d'excitation sinusoïdal ou cosinusoïdal (51) pour un capteur d'angle de rotation, comprenant les étapes consistant à :

délivrer (S01) un signal d'entrée (52) sur la base du signal d'excitation (51) dont la plausibilité doit être vérifiée ;
déterminer (S02) une estimation d'amplitudes (53) pour une amplitude du signal d'excitation (51) sur la base du signal d'entrée (52) délivré ;
déterminer (S03) une estimation de position de phase (54) pour une position de phase du signal d'excitation (51) sur la base du signal d'entrée (52) délivré et sur la base d'une période prévue du signal d'excitation (51) ;
produire un signal auxiliaire déphasé de 90 degrés par rapport au signal d'entrée (52), ou sinon identique au signal d'entrée (52), par utilisation de la valeur d'estimation d'amplitudes (53) déterminée et de la valeur d'estimation de position de phase (54) déterminée ;
produire (S04) un signal de diagnostic (55) sur la base d'un carré du signal d'entrée (52) et sur la base d'un carré du signal auxiliaire produit ; et
classer (S05) le signal d'excitation (51) comme étant plausible ou non plausible sur la base du signal de diagnostic (55) en fonction d'une plage de valeurs prédéterminée pour le signal de diagnostic (55).

5. Procédé selon la revendication 4,
dans lequel la détermination (S03) de la valeur d'estimation de position de phase (54) comprend la détermination d'un passage à zéro du signal d'entrée (52) ; et dans lequel la détermination (S03) de la valeur d'estimation de position de phase (54) est en outre basée sur le passage à zéro déterminé du signal d'entrée (52).

6. Procédé selon la revendication 4 ou 5, dans lequel le signal de diagnostic (55) est basé sur une somme du carré du signal d'entrée (52) et du carré du signal auxiliaire produit.

# Fig. 1

# Fig. 2

# Fig. 3

S01

S02

S03

S04

S05

**IN DER BESCHREIBUNG AUFGEFÜHRTE DOKUMENTE**

**In der Beschreibung aufgeführte Patentdokumente**

- EP 0921387 A2

- DE 102011078583 A1